(19) Europäisches Patentamt / European Patent Office / Office européen des brevets

(11) **EP 2 886 409 A1**

(12) **EUROPEAN PATENT APPLICATION**

(43) Date of publication:
24.06.2015 Bulletin 2015/26

(51) Int Cl.:
*B60W 30/14* (2006.01)  *B60W 50/00* (2006.01)

(21) Application number: 13006043.7

(22) Date of filing: 23.12.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Karlsruher Institut für Technologie**
**76131 Karlsruhe (DE)**

(72) Inventors:
• **Bleimund, Felix**
**76131 Karlsruhe (DE)**
• **Rhode, Stephan**
**76139 Karlsruhe (DE)**

(74) Representative: **Müller-Boré & Partner**
**Patentanwälte PartG mbB**
**Friedenheimer Brücke 21**
**80639 München (DE)**

(54) **Method, computer program product, device, and vehicle for calcul ating an actuation variable for the operation of a vehicle**

(57)    A method of calculating an actuating variable for the operation of a vehicle, comprises the steps of:
- choosing a section of a route as a smoothing window in which the actuating variable is to be calculated,
- fitting a polynomial function representing the actuating variable to a time series of given data points in the smoothing window,
- calculating the actuating variable within the smoothing window,
- shifting the chosen smoothing window by adding at least one further data point,
- updating the calculation of the actuating variable by fitting the polynomial function to data points defined in the shifted smoothing window.

Figure 1A

EP 2 886 409 A1

## Description

The invention relates to a method, computer program product, device, and vehicle for calculating an actuating variable for the operation of a vehicle and to using such a device to calculate an actuating variable for the operation of a vehicle.

In particular, the invention relates to optimising a driving strategy of a vehicle. Optimising the driving strategy of a vehicle may be achieved by determining an optimised value or development of at least one actuating variable for the operation of the vehicle, the actuating variable being optimised with respect to an energy consumption of the vehicle. Such an actuating variable may for example be the velocity of the vehicle on a given driving route. Using the optimised actuating variable when driving the vehicle will save energy compared to a setting in that the vehicle is operated with another value of said actuating variable.

It is known to use the Bellman principle to determine an actuating variable that is optimised for a predetermined driving route. Using the Bellman principle to calculate actuating variables for the operation of a vehicle has the disadvantage that the method gets very complicated and uses a lot of computational resources when a detailed raster is used. Furthermore, adjustments caused by environmental changes may not be taken into account directly. For example, if a driver of a vehicle is not able to drive at a predetermined speed, the speed being the actuating variable, this current real speed as opposed to a calculated theoretical speed may affect the calculation model based on the Bellman principle in a way that the speed determined by the model may no longer be optimised with respect to the energy consumption of the vehicle.

A problem relates to a way of determining an actuating variable for the operation of a vehicle that is optimised with respect to the energy consumption of the vehicle, that enables a fast response to environmental changes, and that needs limited processing resources.

This problem is solved by the subject-matter of the independent claims.

One aspect relates to a method of calculating an actuating variable for the operation of a vehicle, comprising the steps of:

- choosing a section of a route of the vehicle as a smoothing window in which the actuating variable is to be calculated,
- fitting a polynomial function representing the actuating variable to a time series of given data points in the smoothing window,
- calculating the actuating variable within the smoothing window,
- shifting the chosen smoothing window by adding at least one further data point,
- updating the calculation of the actuating variable by fitting the polynomial function to data points of the shifted smoothing window.

The actuating variable may be calculated to optimise the energy consumption of the vehicle. The actuating variable is related to the operation of the vehicle and may be set automatically or manually to a preset value. An optimised value for the setting of the actuating variable is calculated by the method. The actuating variable may be the velocity of the vehicle, or any actuating variable related to the energy consumption of the vehicle.

As section of the route, a part of the route on which the vehicle is moving or on which the vehicle is supposed to move within the near future may be chosen. Preferably, said smoothing window is chosen to contain the position of the vehicle. For example, the smoothing window may contain a section of the route of the vehicle that includes the current position of the vehicle and that comprises a length from 10 m to 1000 m, preferably from 50 m to 500 m, more preferably from 100 m to 200 m.

The vehicle may be any vehicle that is able to drive on land and/or sea, and/or that is able to fly. Thus, the route of the vehicle may in particular be a driving route, a flying route, a train route, and/or a shipping route of the vehicle.

A polynomial function is used that represents the actuating variable. The polynomial function is defined on the smoothing window and may give the actuating variable for any time/location within the smoothing window. Outside the smoothing window, the polynomial function may be defined but may not be fitted to any data points. The time series of given data points is defined within the smoothing window. The given data points may contain information about a speed limit at a certain location along a given route of the vehicle, and/or may contain information about bends of the road or hills that may influence the actuating variable, e.g. the velocity of the vehicle. The polynomial function is fitted to connect the given data points, preferably continuously, within the currently active smoothing window. The fitting of the polynomial function may be achieved by mathematical filter operations.

The actuating variable is calculated for at least one value within the smoothing window. Furthermore, a development of the actuating variable over the whole smoothing window may be calculated. The result of the calculation may be displayed, e.g. as a recommendation of the actuating variable, and/or may be used as target-setting for an automatic speed control.

As soon as the currently relevant actuating variable is determined, the smoothing window is shifted by adding at least one further data point. The smoothing window may be shifted into the future on a time scale. A corresponding shifting distance may correspond to the distance that the vehicle will drive within this time shift. For example, the smoothing window may be shifted forward by 1 s corresponding to shifting the section of the route of the vehicle e.g. 10 m ahead, depending on the current speed of the vehicle. Both the end and the beginning of the smoothing window may be shifted by the same distance and/or the same time. Alternatively, the length of the smoothing window may be altered for each repetition to include only predetermined data points. When shifting the smoothing window, at least one further data point is added to the smoothing window, while former relevant data points that are at a position outside of the shifted smoothing window may be dropped from the calculation.

As starting point for a smoothing window, the actual position of the vehicle may be chosen. As end point of the smoothing window, a predetermined distance ahead of the vehicle along the predetermined route of the vehicle may be chosen. Both the starting point and the end point of the smoothing window may be updated regularly, e.g. depending on the current position of the vehicle.

After the calculation of the actuating variable, or the calculation of a development of the actuating variable within the smoothing window, an update of the model is achieved by fitting the polynomial function to data points of the shifted smoothing window. The polynomial function representing the actuating variable is shifted together with the smoothing window. This enables the calculation of an updated actuating variable within the shifted smoothing window. The polynomial function may be shifted to the new smoothing window and fitted to the data points given within the shifted smoothing window.

By choosing a reasonable length of the smoothing window, an actuating variable for the operation of the vehicle may be calculated that is optimised with respect to the energy consumption of the vehicle. The method enables a quick response to current influences by the surroundings that affect the actuating variable.

The actuating value that is determined by the calculation may be used to operate the vehicle with the determined actuating variable. For example, the actuating value may be an actuating value related to the engine of the vehicle. Then, the determined actuating value may be used to operate the engine of the vehicle. For example, an acceleration, the number of revolutions of the engine, a velocity, a motoring torque, and/or an energy consumption of the engine may be adjusted to correspond to the calculated actuating value. In general, the vehicle may be operated in a way that uses the determined actuating value as an operative actuating value for the movement of the vehicle.

The method may include a step of controlling the operation of the vehicle so that the actuating variable of the operation of the vehicle is set to the actuating variable determined by the method described above.

In an embodiment, a velocity and/or an acceleration of the vehicle is used as the actuating variable. The velocity and the acceleration of the vehicle have a direct impact on the energy consumption of the vehicle. Another possible actuating variable for the optimisation may be the angular position of the steering wheel of the vehicle.

In an embodiment, a Kalman filter is used to fit the polynomial function to the smoothing window. Kalman filters are known from the document "A New Approach to Linear Filtering and Prediction Problems" by R. E. Kalman, Journal of Basic Engineering, 1960 by ASME. Kalman filters provide a known mathematical method of estimating state-space models and/or input-output models. The method may be implemented by using a Polynomial Kalman Smoother (PKS) to fit the polynomial function to the time series of data points.

According to an embodiment, the smoothing window is shifted on a distance scale corresponding to an amount of time passed since a foregoing repetition of the calculation. This enables an updating of the actuating variable for a currently relevant point of time. For example, if the calculation is repeated every second, the smoothing window will be shifted by one second on a time scale, and by a section of the route of the vehicle corresponding to the distance that the vehicle drove within the last second. Both the starting point and the end point of the smoothing window may be shifted by the same amount of time/distance. Both the start and the end point of the smoothing window will be updated regularly to or depending on the current position of the vehicle.

In an embodiment, both the starting point and the end point of the smoothing window are shifted by the same shifting distance, and wherein data outside of the shifted smoothing window are neglected. The neglecting of data points may be accomplished by an exponentially increasing forgetting factor for those data points that were previously located within the active smoothing window. This may result in certain data points becoming disregarded when updating both the polynomial function and the calculating of the actuating variable for the shifted smoothing window.

In an embodiment, the calculation is executed in an online fashion. This means that the processing speed of the calculation is higher that the clock speed of the calculation, e.g. the shifting time of the smoothing window. This keeps the calculation of the actuating variable up to date and results in an online calculation of the current actuating variable. In particular, the shifting of the smoothing window, the shifting of the polynomial function, the fitting of the polynomial function, and the calculation of the actuating variable for the operation of the vehicle are all executed in a time span that is shorter than the step size (on a time scale) that is used to shift the smoothing window. For example, when the smoothing window is usually shifted by one second, the corresponding calculations are executed in less than one second. This enables a quick reaction to any environmental influence and enables a determination of the actuating variable in an online fashion.

In an embodiment, the data points comprise information related to the actuating variable at positions along the route of the vehicle. This information may include a speed limit and/or route conditions that influence the velocity of the vehicle.

In an embodiment, the steps of shifting the smoothing window and updating the calculation of the actuating variable are repeated as long as the calculation is activated. The calculation may be activated while the vehicle is driven, while a route of the vehicle is known, while the engine of the vehicle is running, and/or while the calculation is started manually by a user, e.g. the driver of the vehicle.

In an embodiment of the invention, the method is carried out as computer implemented method by a programmable processor.

An aspect relates to a computer programme product comprising a computer readable storage medium storing one or more programmes, the one or more programmes comprising instructions that, when executed by at least one programmable processor, cause the at least one programmable processor to perform the method according to the previous aspect of the invention.

An aspect relates to a device for calculating an actuating variable for the operation of a vehicle, the device comprises:

- a choosing unit for choosing a section of a route as a smoothing window in which the actuating variable is to be calculated,
- a fitting unit for fitting a polynomial function representing the actuating variable to a time series of given data points in the smoothing window,
- a calculation unit for calculating the actuating variable within the smoothing window,
- a shifting unit for shifting the chosen smoothing window by adding at least one further data point,
- an updating unit for updating the calculation of the actuating variable by fitting the polynomial function to data points defined in the shifted smoothing window.

The device and its units may comprise circuits, processors, memory, interfaces, connections and/or further elements that enable the device and its units to calculate an actuating value according to the method of the first aspect of the invention. The device may comprise a computer-readable storage medium storing one or more programs, the one or more programs comprising instructions. The device may comprise an interface that enables a connection of the device to the internet.

An aspect relates to a vehicle that comprises a device for calculating an actuating variable for the operation of a vehicle according to the previous aspect of the invention. In particular, the vehicle may be able to calculate the speed and/or acceleration of the vehicle in an online fashion according to the method described above.

An aspect relates to a method of calculating an actuating variable for the operation of a device, comprising the steps of:

- choosing a subset of a data set as a smoothing window in which the actuating variable is to be calculated,
- fitting a polynomial function representing the actuating variable to a time series of given data points in the smoothing window,
- calculating the actuating variable within the smoothing window,
- shifting the chosen smoothing window by adding at least one further data point,
- updating the calculation of the actuating variable by fitting the polynomial function to data points defined in the shifted smoothing window.

The method may be accomplished by applying a Polynomial Kalman Smoother (PKS) to calculate the actuating variable.

Further aspects of the invention are shown in the figures. Shown by:

Fig. 1A    is a schematic diagram of a polynomial function defined on a predetermined smoothing window,

Fig. 1B    is a schematic diagram of a shifting of a predetermined smoothing window,

Fig. 1C    is a schematic diagram of a shifting of the polynomial function shown in Fig. 1A to the shifted smoothing window shown by Fig. 1B,

Fig. 1D    is in a schematic diagram the shifted polynomial function shown by Fig. 1C fitted to data points of a shifted smoothing window,

Fig. 2A   is in a diagram the result of applying different substitutions to a polynomial function of 7th degree in order to shift the polynomial function,

Fig. 2B   is an algorithm to develop matrix elements for a shifting matrix,

Fig. 3A   is in a diagram a polynomial function of the degree 3 fitted to 10 data points,

Fig. 3B   is an algorithm to apply a Kalman Filter to a polynomial function to fit the function to data points, and

Fig. 4   is a block diagram of updating a polynomial function.

As a method to calculate an actuating value for the operation of a vehicle, an approach is chosen that includes a polynomial function for extracting a signal from a noisy time series. A method of calculating an actuating variable for the operation of a vehicle is explained as an embodiment wherein a Polynomial Kalman Smoother (short: PKS) is used. The PKS uses a single polynomial function to describe the underlaying noise free signal of a noisy time series. The PKS needs only a single update step to include a new data point. The PKS enables accessing a number of data points within a smoothing window and may evaluate a polynomial function together with its derivatives at multiple points. The method includes a determination of the coefficients of the polynomial function.

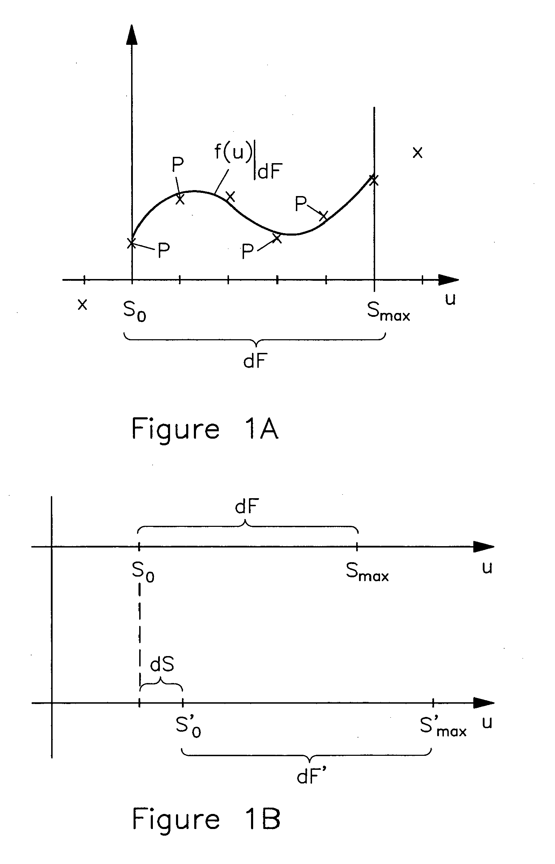

**Fig. 1A** shows a schematic diagram of a polynomial function f(u) defined within a smoothing window dF. The smoothing window dF may be chosen as section of a route on which a vehicle is currently moving. The route may be a driving route of a vehicle. The length of the smoothing window dF may correspond to a distance from 10 m to 1000 m. The smoothing window comprises a starting point So that may be chosen as a current position of the vehicle. The smoothing window extends from the starting point So to the end point $S_{max}$ of the smoothing window. Alternatively, the current position of the vehicle may be a position within the smoothing window, e.g. the middle of the smoothing window.

Within the smoothing window dF, a few data points P are given. The data points P may contain information about a speed limit at the position of the driving route to which the data point P corresponds, and/or may contain information about road conditions like bends, hills, etc. which may affect the maximum velocity of the vehicle.

The u-axis of the diagram shown in Fig. 1A corresponds to a position on a driving route. The y-axis corresponds to a vehicle speed.

The data points P may be chosen in a fixed and predetermined raster, e.g. one data point for every meter of the driving route. The raster distance for the data points influences the needed computational resources to calculate the actuating variable. Sufficiently exact results are achieved by choosing a raster of 10 m or even 20 m. Modern processors are able to even handle a raster distance of one meter in an online fashion. Thus, a raster size between 0.5 m and 30 m is preferably chosen.

**Fig. 1B** shows in a schematic diagram the shifting of the smoothing window dF to a shifted smoothing window dF'. Both the starting point So and the end point $S_{max}$ of the smoothing window dF are shifted for the same shifting distance dS onto the shifted starting point $S'_0$ and the shifted end point $S'_{max}$. The shifting distance dS may be chosen to correspond to a distance that the vehicle drove since the last update of the calculation, or may be chosen to correspond to a fixed time constant of a few seconds.

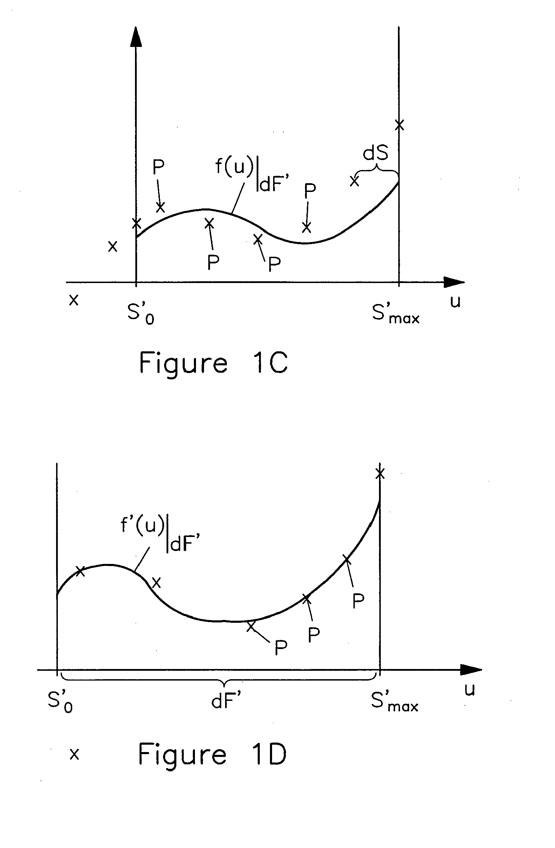

**Fig. 1C** shows in a schematic diagram the polynomial function f(u) shifted to the shifted smoothing window dF'. The shifted smoothing window dF' contains at least one new data point located in $[S_{max}, S'_{max}]$. Thus, the polynomial function f(u) may be updated and fitted to all the data points P given in the the shifted smoothing window dF'.

**Fig. 1 D** shows in a schematic diagram a refitted polynomial function f'(u) fitted to the data points P of the shifted smoothing window dF'. The shifted and fitted polynomial function f(u) is defined within the shifted smoothing window dF'. The shifted and refitted polynomial function f(u) may be used to calculate an actuating variable like a recommended velocity of a vehicle for every position within the shifted smoothing window dF'.

Polynomial Functions

A polynomial function f(u) or $\hat{d}$ of degree *n*, where n is the number of polynomial parameters, may be written as follows:

$$\widehat{d} = \widehat{x}_1 + \widehat{x}_2 u + \widehat{x}_3 u^2 + \cdots + \widehat{x}_n u^{n-1}$$

$$\widehat{d} = u \cdot \widehat{x}$$

Therein, a control input vector is defined as $u=(u^0, u^1, u^2, ...,u^{n-1})$ that contains the needed powers of the input variable $u$, e.g. a position on a driving route. The estimated state vector $\hat{x} = (\hat{x}_1, \hat{x}_2, \hat{x}_3,...,\hat{x}_n)^T$ contains the coefficients of the polynomial function for the position T. The control input vector comprises the powers of the position of the current data point, the current data point being at the position T. Indicator $d$ comprises the value of the current data point.

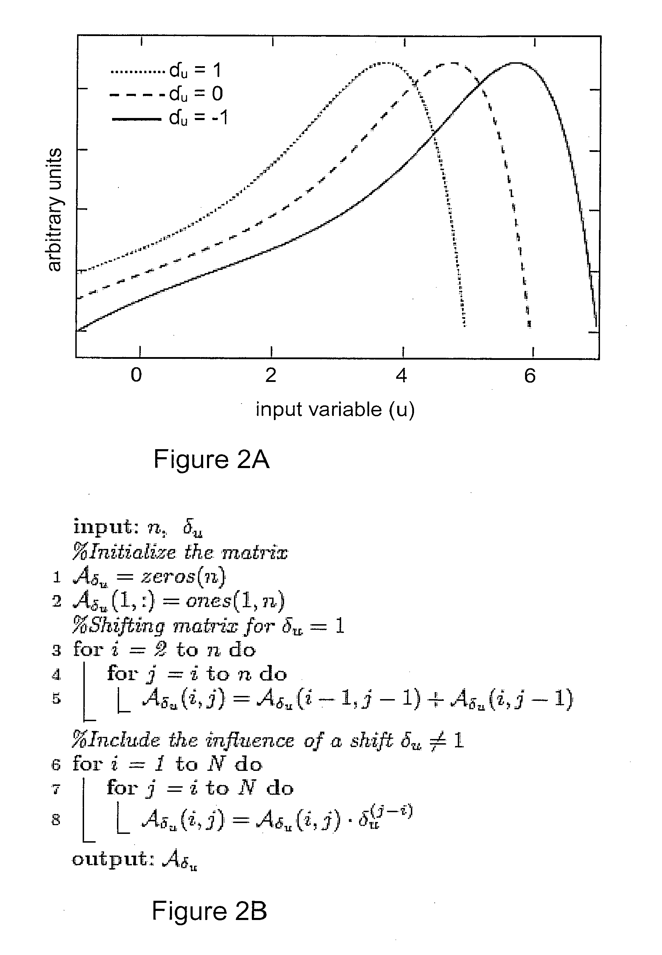

The polynomial function may be shifted along the dimension of the input variable by substituting the input variable $u$ with $u+\delta_u$. In this notation, a positive shift ($\delta_u$) shifts the polynomial function in the direction of smaller input values and vice versa, as shown in the schematic diagram of **Fig. 2A**. Fig. 2A shows the effect of different substitutions to a polynomial function of the seventh degree. The shifting of a polynomial function applies by substitution of the input variable $u$.

For a polynomial function of degree 3, the substitution can be written as follows:

$$\widehat{d'} = \widehat{x}_1 + \widehat{x}_2(u + \delta_u) + \widehat{x}_3(u + \delta_u)^2 + \widehat{x}_4(u + \delta_u)^3 \quad .$$

Thus, the shifted polynomial function $\hat{d'}$ may be rearranged:

$$\widehat{d'} = \begin{array}{llll} \widehat{x}_1 & +\widehat{x}_2\delta_u & +\widehat{x}_3\delta_u^2 & +\widehat{x}_4\delta_u^3 \\ & +\widehat{x}_2 u & +\widehat{x}_3 2\delta_u u & +\widehat{x}_4 3\delta_u^2 u \\ & & +\widehat{x}_3 u^2 & +\widehat{x}_4 3\delta_u u^2 \\ & & & +\widehat{x}_4 u^3 \end{array} \quad .$$

The rearranged representation helps to identify the set of coefficients for the shifted polynomial function $\hat{d'}$. Furthermore, the rearranged representation shows the difference to the original polynomial function $\hat{d}$. Thus, a shifting matrix ($A_{\delta_u}$) may be defined that transforms the original set of coefficients $x$ to a new set of coefficients $x'$ for the shifted polynomial function $\hat{d'}$ by a matrix multiplication. For a polynomial function of degree 3, the shifting matrix and the new set of coefficients may be written as:

$$\mathcal{A}_{\delta_u} = \begin{bmatrix} 1 & 1\delta_u^1 & 1\delta_u^2 & 1\delta_u^3 \\ 0 & 1 & 2\delta_u^1 & 3\delta_u^2 \\ 0 & 0 & 1 & 3\delta_u^1 \\ 0 & 0 & 0 & 1 \end{bmatrix}$$

$$x' = \mathcal{A}_{\delta_u} \cdot x$$

The shifting matrix ($A_{\delta_u}$) describes the transition of the coefficients $x$ of the polynomial function from the previous state to the current state.

In general, the shifting matrix ($A_{\delta_u}$) may be generated by an algorithm, e.g. the algorithm shown in **Fig. 2B**. The algorithm shown in Fig. 2A generates a shifting matrix for any integer polynomial degree and for any shift. The algorithm is written in a MATLAB-like pseudocode. The algorithm develops the matrix elements for a shifting operator for a shift of $\delta_u = 1$. For this, the shifting matrix is initialized as a zero matrix and the elements of the first row are set to 1. To derive the main matrix elements, the elements to the left are added to the elements to the upper left:

$$\mathcal{A}_{\delta_u}(i,j) = \mathcal{A}_{\delta_u}(i-1,j-1) + \mathcal{A}_{\delta_u}(i,j-1)$$

The algorithm may be executed to generate all elements of the upper diagonal matrix starting in the second row, i.e. $(i \geq 2) \wedge (i \leq j)$. During a second step, the upper diagonal matrix elements are multiplied by the shift $\delta_u$ raised to the power of the column index $(i)$ minus the row index $(j)$:

$$\mathcal{A}_{\delta_u}(i,j) = \mathcal{A}_{\delta_u}(i,j) \cdot \delta_u^{(j-i)}$$

For the PKS algorithm, increasing or decreasing the domain size changes the function properties, e.g. how the ability to follow changes in the amplitude of the signal influences the polynomial coefficients. Furthermore, shifting a function can be understood as shifting the domain of the function in the opposite direction. That is, shifting a function by $\delta_u$ = 1 while maintaining the domain position is equivalent to shifting the domain by $\delta_u$ = -1 while keeping the function untouched.

Kalman Filter for Fitting a Polynomial Function

A Kalman filter algorithm provides a recursive solution to the problem of linear filtering. For this, a measurement noise matrix R is used in a linear Kalman filter framework, similar to a forgetting factor ($\lambda$) known from the usage in Recursive Least Squares (RLS) filters. The measurement noise matrix $R$ can be used as quantifier between 0 and 1. Preferably, a value larger than 0.9 is chosen for the measurement noise matrix $R$.

At each iteration, a measurement matrix (C) is set equal to the control input vector ($u$), waiving the usage of a control matrix. This allows using a state vector with just the size of the polynomial coefficients.

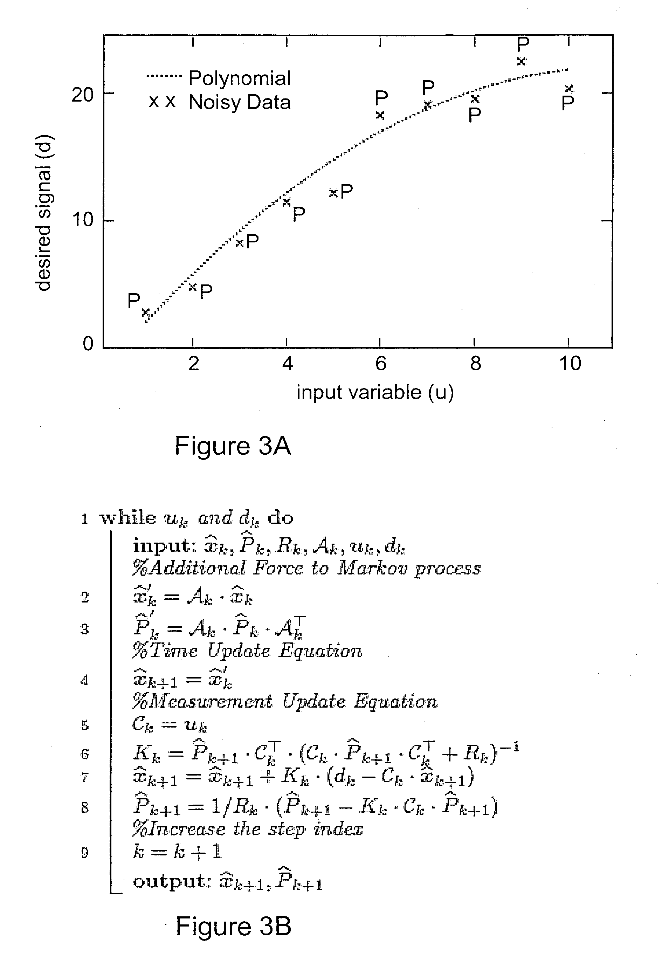

**Fig. 3B** shows an exemplary algorithm written in a matlab like pseudocode showing a sequence of operations of a single filtering step, i.e. the adding of a single data point P. The algorithm shown in Fig. 3B provides an online filter algorithm calculating for each time step k the adjusted polynomial coefficients $\hat{x}$ and the corresponding covariance matrix $\hat{P}$.

In order to fit a polynomial function $\hat{d}$ to a set of data points $d$, the Kalman filter can be set up as follows:

$$
\begin{aligned}
R_k &= \lambda = 1 \\
\mathcal{A}_k &= I \\
u_k &= (u_k^0, u_k^1, u_k^2, .., u_k^{n-1}) \\
d_k &= d_k
\end{aligned}
$$

A covariance matrix may be initialized as $\hat{P}_0 = 100 \cdot I$. The estimated state vector may be initialized as $\hat{x}_0 = 0$. The desired signal ($d$) may be recorded over input variable ($u$). For each step of index $k$=0 to $k_{max}$, the Kalman filter algorithm is applied and the inputs $\hat{x}_k$ and $\hat{P}_k$ are calculated depending on the respective outputs of the previous iteration for the previous index step.

**Fig. 3A** shows in a diagram a polynomial function of degree 3 fitted by a Kalman filter algorithm to ten data points P. The polynomial function is defined on the domain $u$ = [1, 10] as smoothing window.

Signal Extraction Algorithm

For the Polynomial Kalman Smoother (PKS), a method of shifting a polynomial function is combined with the mathematical procedure of fitting a polynomial function to a set of data points by a Kalman filter operation. The recursive nature of the Kalman filter may, thus, be used in combination with a transient memory implemented via a forgetting factor. Thus, a signal extraction is achieved in two steps, namely an update step and an evaluation step.

For the update step, a current set of polynomial parameters $\hat{x}_k$ and the respective estimated covariance matrix ($\hat{P}$) are needed. For this, either the initial parameters $\hat{x}_0$ and the initial covariance matrix $\hat{P}_0$ may be used, or the parameters and the matrix of the already fitted polynomial function as shown, e.g., in Fig. 3A.

A domain of the polynomial function has to be defined, e.g. a domain from zero to ten as shown in Fig. 3A. The domain of the polynomial function corresponds to a smoothing window. When applying a shift of the domain, the distance from an actual data point to a new data point is to be calculated as shifting distance.

In an exemplary embodiment, the shifting distance is defined as 1. The measurement noise ($R$) is set to $1-(1/10)=0.9^4$, the input variable ($u$) is set to 10, and the shift ($\delta_u$) is set to 1. The shifting matrix ($A_{\delta u}$) may, thus, be derived by an algorithm similar to the algorithm shown in Fig. 2B. A control input vector may be derived by a Kalman filter. For a polynomial function of degree 3, the Kalman filter set up may be expressed as follows:

$$R_k = 0.9 \quad A_k = A_{\delta_u} = \begin{bmatrix} 1 & 1 & 1 & 1 \\ 0 & 1 & 2 & 3 \\ 0 & 0 & 1 & 3 \\ 0 & 0 & 0 & 1 \end{bmatrix}$$

$$u_k = (1,10,100,1000)$$
$$d_k = d_k$$

For the second step of the signal extraction, the evaluation step, a point is chosen where to evaluate the fitted and updated function, e.g. at the middle of the shifted smoothing window, at the position 5.5. Again, the control input vector is derived with a Kalman filter, in this example as $u = (1, 5.5, 30.25, 166.375)$. The control input vector is multiplied with the estimated state vector to obtain the extracted signal:

$$\hat{d} = u \cdot \hat{x}$$

.

In this setup, the filter delay of 4.5 s is obtained if the unit of $u$ is 1 s.

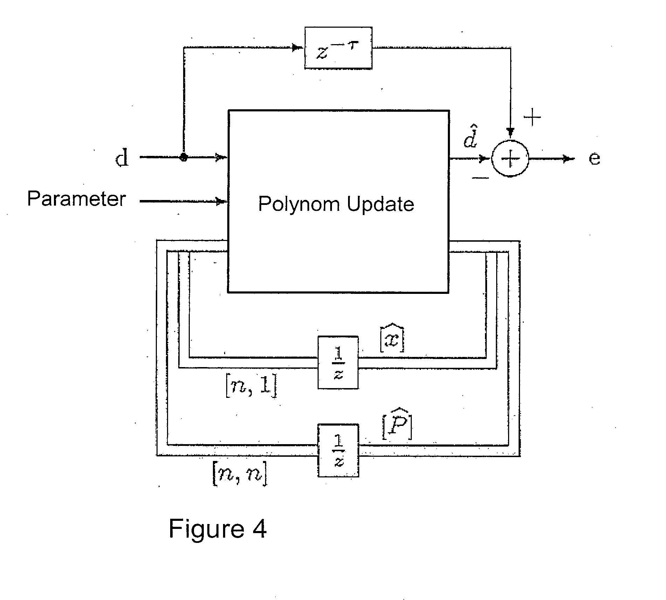

Fig. 4 shows a block diagram of how the polynomial function is updated. As input, parameters are used as the length of the window, the measurement noise matrix R, the control input vector **u,** and the shifting matrix **A**. Another input $d$ is provided by the current indicator. Accordingly, the actuating variable $\hat{d}$ at a given position is, thus:

$$\hat{d} = u \cdot \hat{x}$$

.

The algorithm is able to respond to any conditions/requirements changing the data points during the run time of the algorithm, and to any requirement of new/additional data points for the calculation. In such a case, such parameters may be input at any time into the Kalman filter as an update. The Polynomial Kalman Shifting algorithm as shown in Fig. 4 adjusts the polynomial function according to the block diagram. Such an amendment may be necessary, e.g., because a velocity of the driven vehicle differs from the velocity as calculated in the previous recursion of the calculation.

The method enables an efficient and fast processing that requires only a limited processing capacity depending on the length of the smoothing window. Changes caused by any environmental influence may be taken into account by the algorithm within a single repetition.

The method uses a polynomial function that is well defined over the whole smoothing window as analytical polynomial function with specific parameters. The polynomial function allows the determination and calculation of an actuating variable and its optimised development by using online filter algorithms. Changes may be implemented into the calculation in real time.

Fig. 4 shows that the online filter algorithm requires a limited computer memory. The required computer memory is independent of the length of the smoothing window since only the coefficients of $\hat{x}$ and the variance matrix P have to be stored in the memory.

The algorithm shown in Fig. 3B shows how the online filter algorithm provides a fast processing of new information. New information may be introduced into the algorithm in form of a new data point $P$ at a position $T$. Such a new data point is processed by the algorithm within a single repetition so that the coefficients x of the polynome reflect the updated information. A recalculation of all the coefficients within the whole smoothing window is not required.

The actuating variable that is optimised may be a velocity, an acceleration, an energy consumption, and/or the position of the steering wheel. Furthermore, the actuating variable may be a combination of the foresaid entities.

**List of Reference Numerals**

| | |
|---|---|
| $f(u)$, $\hat{d}$ | polynomial function |
| $f'(u)$, $\hat{d}'$ | shifted polynomial function |
| dF | smoothing window |
| dF' | shifted smoothing window |
| P | data point |
| dS | shifting distance |
| $S_0$ | starting point of the smoothing window |
| $S_{max}$ | end point of the smoothing window |
| $S'_0$ | shifted starting point of the smoothing window |
| $S'_{max}$ | shifted end point of the smoothing window |

**Claims**

1. Method of calculating an actuating variable for the operation of a vehicle, comprising the steps of:

   - choosing a section of a route as a smoothing window in which the actuating variable is to be calculated,
   - fitting a polynomial function representing the actuating variable to a time series of given data points in the smoothing window,
   - calculating the actuating variable within the smoothing window,
   - shifting the chosen smoothing window by adding at least one further data point,
   - updating the calculation of the actuating variable by fitting the polynomial function to data points defined in the shifted smoothing window.

2. Method according to claim 1, wherein a velocity and/or an acceleration of the vehicle is used as the actuating variable.

3. Method according to claim 1 or 2, wherein a Kalman Filter is used to fit the polynomial function to the data points within the smoothing window.

4. Method according to any of the preceding claims, wherein the smoothing window is shifted on a distance scale corresponding to an amount of time passed since a foregoing repetition of the calculation.

5. Method according to any of the preceding claims, wherein both the starting point and the end point of the smoothing window are shifted by the same shifting distance, and wherein data points outside of the shifted smoothing are neglected.

6. Method according to any of the preceding claims, wherein the calculation is executed in an online fashion.

7. Method according to any of the preceding claims, wherein the data points comprise information related to the actuating variable at points along the driving route.

8. Method according to any of the preceding claims, wherein the steps of shifting the smoothing window and updating the calculation of the actuating variable are repeated as long as the calculation is activated.

9. Method according to any of the preceding claims, wherein the method is carried out as computer-implemented method by a programmable processor.

10. A computer program product comprising a computer-readable storage medium storing one or more programs, the one or more programs comprising instructions that, when executed by at least one programmable processor, cause the at least one programmable processor to perform the method according to one of the preceding claims.

**11.** Device for calculating an actuating variable for the operation of a vehicle, comprising:

- a choosing unit for choosing a section of a route as a smoothing window in which the actuating variable is to be calculated,
- a fitting unit for fitting a polynomial function representing the actuating variable to a time series of given data points in the smoothing window,
- a calculation unit for calculating the actuating variable within the smoothing window,
- a shifting unit for shifting the chosen smoothing window by adding at least one further data point,
- an updating unit for updating the calculation of the actuating variable by fitting the polynomial function to data points defined in the shifted smoothing window.

**12.** Using the device according to claim 11 to calculate an actuating value according to the method according to any of claims 1 to 9.

**13.** Vehicle, comprising a device for calculating an actuating variable for the operation of a vehicle according to claim 11.

Figure 1A

Figure 1B

Figure 1C

Figure 1D

Figure 2A

input: $n$, $\delta_u$
%Initialize the matrix
1  $\mathcal{A}_{\delta_u} = zeros(n)$
2  $\mathcal{A}_{\delta_u}(1,:) = ones(1,n)$
   %Shifting matrix for $\delta_u = 1$
3  for $i = 2$ to $n$ do
4    for $j = i$ to $n$ do
5      $\mathcal{A}_{\delta_u}(i,j) = \mathcal{A}_{\delta_u}(i-1,j-1) + \mathcal{A}_{\delta_u}(i,j-1)$

   %Include the influence of a shift $\delta_u \neq 1$
6  for $i = 1$ to $N$ do
7    for $j = i$ to $N$ do
8      $\mathcal{A}_{\delta_u}(i,j) = \mathcal{A}_{\delta_u}(i,j) \cdot \delta_u^{(j-i)}$
output: $\mathcal{A}_{\delta_u}$

Figure 2B

Figure 3A

Figure 3B

Figure 4

Europäisches
Patentamt
European
Patent Office
Office européen
des brevets

**PARTIAL EUROPEAN SEARCH REPORT**

under Rule 62a and/or 63 of the European Patent Convention.
This report shall be considered, for the purposes of
subsequent proceedings, as the European search report

**Application Number**

EP 13 00 6043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERIK HELLSTRÖM, MARIA IVARSSON, JAN ASLUND, LARS NIELSEN: "Look-ahead control for heavy trucks to minimize trip time and fuel consumption", ELSEVIER, vol. 17, 15 August 2008 (2008-08-15), pages 245-254, XP002726504, * the whole document * | 1-13 | INV. B60W30/14 B60W50/00 |
| X | WO 2013/012377 A1 (SCANIA CV AB [SE]; JOHANSSON OSKAR [SE]; SOEDERGREN MARIA [SE]; ROOS F) 24 January 2013 (2013-01-24) * the whole document * | 1,9-13 | |
| X | DE 10 2009 030784 A1 (DAIMLER AG [DE]) 4 February 2010 (2010-02-04) * the whole document * | 1-13 | |
| X | DE 103 45 319 A1 (DAIMLER CHRYSLER AG [DE]) 3 June 2004 (2004-06-03) * the whole document * | 1,9-13 | |
|   | -/-- | | TECHNICAL FIELDS SEARCHED (IPC) B60W |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 1 July 2014 | Plenk, Rupert |

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

EP 2 886 409 A1

**PARTIAL EUROPEAN SEARCH REPORT**

Application Number

EP 13 00 6043

## DOCUMENTS CONSIDERED TO BE RELEVANT

| Category | Citation of document with indication, where appropriate, of relevant passages | Relevant to claim |
|---|---|---|
| A | FR 2 972 285 A1 (PEUGEOT CITROEN AUTOMOBILES SA [FR]) 7 September 2012 (2012-09-07) * page 5, line 26 - page 6, line 24; figure 1 * | 1,9-13 |

CLASSIFICATION OF THE APPLICATION (IPC)

TECHNICAL FIELDS SEARCHED (IPC)

EPO FORM 1503 03.82 (P04C10)

17

Europäisches
Patentamt

European
Patent Office

Office européen
des brevets

**INCOMPLETE SEARCH
SHEET C**

Claim(s) completely searchable:
-

Claim(s) searched incompletely:
1-13

Reason for the limitation of the search:

Prior to doing the search, an invitation pursuant Rule 63(1) EPC has been dispatched. Applicant has reacted to this invitation. In spite of applicant's explanation, the application is still not understood.
The search has covered the use of a moving window, considering the terrain ahead, to optimize vehicle behaviour.
Some points have been addressed, e.g. the use of an actuating variable comprising more than one variable. As applicant stated, the actuating variable may be a vector including velocity, acceleration, energy consumption and/or position of the steering wheel.
Other points, however, remain obscure. It is not understood how this actuating variable shall be fitted to e.g. bends or hills. The description, page 3, lines 8 to 18, states:
"The given data points may contain information about a speed limit at a certain location along a given route of the vehicle, and/or may contain information about bends of the road or hills that may influence the actuating variable, e.g. the velocity of the vehicle."
Stated differently, the given data points may contain only information about bends or hills.
Applicant has stated in his reply to the invitation (bridging pages 4 and 5):
"... a person skilled in the art, ..., would not try to fit a velocity value to a trend of a road, but to the recommended speed at this position."
It would appear that applicant confirms the assessment given in the invitation: it is not understood how a polynomial function should be fitted to data points indicating road slope, in a way to connect the data points, and represent vehicle speed.
The application states that the actuating variable may be calculated to optimize the energy consumption (page 2, lines 22 and 23). The examiner did not find an optimizing step in the description.

## ANNEX TO THE EUROPEAN SEARCH REPORT
## ON EUROPEAN PATENT APPLICATION NO.

EP 13 00 6043

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2014

| Patent document cited in search report | Publication date | Patent family member(s) | Publication date |
|---|---|---|---|
| WO 2013012377 A1 | 24-01-2013 | EP 2732240 A1<br>SE 1100537 A1<br>WO 2013012377 A1 | 21-05-2014<br>16-01-2013<br>24-01-2013 |
| DE 102009030784 A1 | 04-02-2010 | NONE | |
| DE 10345319 A1 | 03-06-2004 | DE 10345319 A1<br>US 2004068359 A1 | 03-06-2004<br>08-04-2004 |
| FR 2972285 A1 | 07-09-2012 | NONE | |

EPO FORM P0459

For more details about this annex : see Official Journal of the European Patent Office, No. 12/82